# EUROPEAN PATENT SPECIFICATION

(11) **EP 2 047 574 B1**
(45) Date of publication and mention of the grant of the patent: **11.05.2011**
(21) Application number: 07789397.2
(22) Date of filing: 01.08.2007
(51) Int. Cl.: H02B 7/08

(54) **TRANSFORMER STATION WITH IMPROVED COOLING**
TRANSFORMATORSTATION MIT VERBESSERTER KÜHLUNG
POSTE DE TRANSFORMATION À REFROIDISSEMENT AMÉLIORÉ

(30) Priority: 03.08.2006 HU 0600190 U
(43) Date of publication of application: 15.04.2009
(73) Proprietor: Jet-Vill Korlátolt Felelösségü Társaság, 1158 Budapest (HU)
(72) Inventor: MAROSÁN, István, 1164 Budapest (HU); POKORNI, János, 1119 Budapest (HU)
(74) Representative: Ronaszéki, Tibor
(86) International application number: PCT/HU2007/000068
(87) International publication number: WO 2008/015485

(56) References cited:
- EP-A- 1 435 681
- FR-A- 2 877 151

## Description

The subject of the invention relates to a transformer station with improved cooling which has a basic body containing in it an internal space bordered by a foundation made from a post-hardening material at least a part of which is under ground level, side walls and a roof, the internal space of the basic body contains a transformer chamber, a switching area separated from it with a dividing wall, and a ventilation passage linking the internal space with the external environment, and located on the roof of the basic body there is an access opening with a cover, and a grid at least partially covering the ventilation passage.

Transformer stations form an important part of electrical energy networks, the task of which is to connect the cable parts at various voltage levels where they meet. The essence of transformer stations is that a transformer and switching equipment for receiving and handling the incoming and outgoing cables at various voltage levels are located in the closed internal space surrounded by the housing, through which the required switching of the various electrical network sections can be created and the network operated reliably. Such a transformer station is presented, for example, in the specification of utility model registration number HU 2.605.

The disadvantage of such transformer stations is, however, that ventilation openings need to be used that are suitable for providing efficient cooling of the transformer chamber due to the large amount of heat loss created during the operation of the transformer. Due to this the greater part of the concrete housing must be located above the ground surface, which has an unfavourable effect on the constructed environment and in this way is undesirable from the aspects of town planning and aesthetics:

In recent times in an increasing number of places in order to overcome this deficiency transformer stations have be used that can be installed located under the ground. In these cases the concrete housing is sunk under ground level and the cooling openings are formed only in the roof element. Engineering structure type number KTW-1000-F is such an underground transformer station and the relevant data of which may be found on the website: www.kvgy.hu.

The undoubted advantage of the construction is that due to the structure of the transformer station it can be located under ground level, and in this way it does not disturb the aesthetic image of the public area or the surface traffic on the ground.

However, its significant disadvantage is that both the inlet and outlet sides of the cooling opening are in the transformer chamber, and are even immediately next to one another, and so due to the rising airflow in the proximity of the inlet opening the flow of the medium becomes uncertain, and as a consequence of which the cooling cannot be properly controlled and the possibility exists that the transformer station may switch itself off as a result of insufficient cooling, which may cause a power cut in the area supplied. Nevertheless, this uncertain medium flow may be improved on with the assistance of a ventilator, for example, but extra energy has to be invested in order to achieve the required level of cooling, which increases the operation costs.

Our goal with the solution according to the invention was to overcome the deficiencies of the known underground transformer stations and to create a version that, besides having a simple construction, is suitable for carrying out the appropriate cooling of the transformer chamber and with it the transformer, that is the efficient extraction of lost heat, without the consumption of separate energy, in other words in a natural way.

The recognition that led us to the construction according to the invention was that if we use inlet and outlet cooling openings in an arrangement and geometrical form different from what is customary, which are connected to air ducts that are located in a novel position, have a unique form and flow path, then a natural airflow that ventilates essentially the whole transformer chamber that is different to what is usual can be established that results in effective cooling and in this way the task can be solved.

In accordance with the set aim the transformer station with improved cooling according to the invention - which has a basic body containing in it an internal space bordered by a foundation made from a post-hardening material at least a part of which is under ground level, side walls and a roof, the internal space of the basic body contains a transformer chamber, a switching area separated from it with a dividing wall, and a ventilation passage linking the internal space with the external environment, and located on the roof of the basic body there is an access opening with a cover, and a grid at least partially covering the ventilation passage - is constructed in such a way that the grid is separated into an inlet grid and an outlet grid by a gap, while the ventilation passage is divided into separately arranged inlet air duct and outlet air duct, where the inlet air duct is located between the inlet grid on the roof and the lower part of the switching area of the internal space, while the outlet air duct is located between the outlet grid on the roof and the upper part of the transformer chamber, in this way the inlet air duct and the outlet air duct are arranged on the two sides of the dividing wall, and located in the dividing wall there is a passage opening permitting the flow of air between the inlet air duct and the outlet air duct.

A further feature of the transformer station according to the invention may be that the passage opening is formed in the lower part of the dividing wall near to the foundation.

In the case of a different embodiment of the invention the inlet air duct has a connection opening in the part near to the foundation, and the passage opening of the dividing wall and the connection opening of the inlet air passage are connected to each other at the lower part of the switching area of the internal space, via the connection air duct located near to the foundation.

In the case of another different embodiment of the transformer station there is a flap fitted to the wall of the inlet air duct that shuts off towards the switching area.

In a still different embodiment of the invention there is a supplementary air passage in the upper part of the dividing wall near to the roof, furthermore, there is an intermediate flap fitted into the supplementary air passage shutting off from the direction of the transformer chamber.

From the point of view of the transformer station it may be favourable if the inlet air duct has an inlet ventilation vent and an inlet vertical air intake, where there is an inflow ventilation grid fitted between the inlet ventilation vent and the inlet vertical air intake.

In another embodiment of the invention there is an outlet ventilation grid fitted into the outlet opening of the outlet air duct that starts from the transformer chamber, the outlet ventilation grid is supplemented with a flap that shuts off from the direction of the transformer chamber.

The most important advantage of the transformer station according to the invention is that due to the air duct arrangement that is different to what is customary the complete ventilation of the transformer chamber can be realised with the natural flow of the environmental air used as a cooling medium, and so the effective cooling of the transformer in such a way that the whole transformer station can be installed hidden under ground level.

A further advantage deriving from this is that due to the natural cooling method it is not necessary to use the extra energy required by equipment that would ensure artificial ventilation and due to this the operation costs of the transformer station are favourable.

Among the advantages it could also be mentioned that due to the lack of auxiliary equipment operating with the use of electrical energy to aid the flow of air the cooling system cannot break down, which also further increases the operation reliability of the transformer station. As the switching off of the transformer station in connection with overheating deriving from the breakdown of the cooling system cannot take place.

Another favourable feature is that due to the novel air duct arrangement and the linking pathway, as well as the location of the grids and the uniquely formed dividing wall, in the case of any arcing short circuit or explosion possibly occurring in the transformer chamber the expansion routes and spaces important from the point of view of the protection of life and the prevention of accidents can be simply and suitably formed, which offers total personal protection for the staff operating and maintaining the transformer station.

A feature that can be evaluated as an economic advantage is that the lack of power cuts due to the operation reliability derived from the construction that realises the transformer station's natural cooling ventilation according to the invention reduces to a large degree the material and other losses occurring for the consumer as a consequence of the loss of power in consumer areas due to network faults.

An advantage that appears on the social level is that the realisation of the transformer station with reliable natural cooling creates the real possibility of relocating the transformer stations located above ground level in public areas to locations under ground. The, on the one had, is important from town planning and aesthetic points of view and also has a positive effect on the feeling of comfort of the population living in the given area. On the other hand it creates the possibility of making better use of the public areas above ground level.

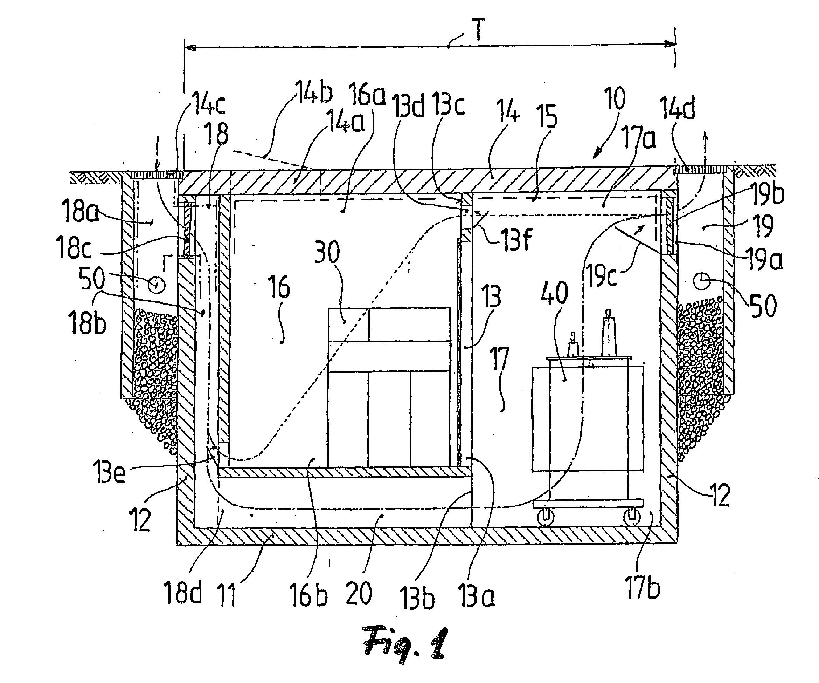

In the following we present the transformer station according to the invention in more detail in connection with construction examples on the basis of a drawing. On the drawing
Figure 1 shows the side view of a version of the transformer station in partial cross section.

Figure 1 shows an advantageous embodiment of the naturally ventilated, underground transformer station according to the invention. It can be observed that the basic body 10, made of a post-hardening material, in this case cast concrete, consists of a foundation 10, side walls 12 and roof 14. The basic body 10 encloses the internal space 15, which is separated by the dividing wall 13, which forms a part of the basic body 10, into the switching area 16 and the transformer chamber 17. The switching equipment 30 is located in the switching area 16 and the transformer 40 is located in the transformer chamber 17.

In the present construction example the basic body 10 is of such a form that the access opening 14a is located in the part of the roof 14 above the switching area 16, which is closed by the cover 14b. Also located on the roof 14 is the inlet grid 14c and the outlet grid 14d, which are separated by a gap "T". In the present case the gap "T" is a distance of several metres, as the inlet grid 14c covers the inlet ventilation vent 18a of the inlet air duct 18 running along the side wall 12 of the switching area 16 belonging to the basic body 10 opposite to the dividing wall 13, while the outlet grid 14d covers the outlet air duct 19 at the side wall 12 of the basic body 10 opposite the transformer chamber 17 dividing wall 13. Both the inlet air duct 18 and the outlet air duct 19 have water drainage passages 50, the task of which is to drain rainwater from the inlet air duct 18 and the outlet air duct 19.

Figure 1 also illustrates that besides the inlet ventilation vent 18a, the inlet air duct 18 also includes the inlet vertical air intake 18b, which is connected with the inlet ventilation vent 18a which connection permits air flow through the inflow ventilation grid 18c. The connection opening 18d is located at the end of the inlet vertical air intake 18b of the inlet duct 18 opposite the inflow ventilation grid 18c at the inlet ventilation vent 18a, which opens out into the connection air duct 20 running horizontally - in this version - along the lower part 16b of the switching area 16 along the foundation 11 of the basic body 10. The end of the connection air duct 20 opposite to the connection opening 18d runs into the passage opening 13b in the lower part 13a of the dividing wall 13. The passage opening 13b is in the lower part 17b of the transformer chamber 17.

The supplementary air passage 13d is located in the upper part 13c of the dividing wall 13 near to the roof, which links up the upper part 16a of the switching area 16 with the upper part 17a of the transformer chamber 17. An intermediate flap 13f is fitted into the supplementary air passage 13d shutting off from the direction of the transformer chamber 17 towards the switching area. There is also a flap 13e located in the part of the inlet vertical air intake 18b of the inlet air duct 18 near to the connection opening 18d in the lower part 16b of the switching area 16. The flap 13e closes from the inlet vertical air intake 18b towards the switching area 16.

Moving over now to the outlet air duct 19 - which is located on the right side of figure 1- it can be seen that there is an outlet opening 19a between the upper part 17a of the transformer chamber 17 and the outlet air duct 19. The outlet opening 19a has an outlet ventilation grid 19b and also a flap 19c fitted into it. Here the flap 19c closes from the transformer chamber 17 towards the outlet air duct 19. The task of the flap 13e, the intermediate flap 13f and the flap 19c is, in the case of a sudden increase in pressure, to immediately close off the airflow between the spaces located on the two sides of the unit, so preventing the spreading of the pressure wave in an undesirable direction.

The operation of the transformer station presented in figure 1 takes place in the following way. After the switching equipment located in the switching area 16 of the internal space 15 of the basic body 10 has been switched on the transformer in the transformer chamber 17 also starts operating. As a consequence of this the air within the internal space of the transformer chamber 17 is heated up as a result of the heat loss from the transformer 40. The warm air flows upwards to the upper part 17a of the transformer chamber 17, then through the outlet ventilation grid 19b of the outlet opening 19a into the outlet air duct 19, then passes without obstruction through the outlet grid 14d of the roof 14 to the external environment. A vacuum is formed in the place of the warm air leaving the internal space 15 of the transformer chamber 17, as a result of which cooler air flows into the transformer chamber 17 through the passage opening 13b formed in the lower part 13a of the dividing wall 13 in the lower part 17b of the transformer chamber 17.

The air arriving at the passage opening 13b passes through the inlet grid 14c of the roof 14 into the inlet ventilation vent 18a of the inlet air duct 18, from where it continues to flow through the inflow ventilation grid 18c to the inlet vertical air intake 18b. A part of the amount of air passing into the inlet vertical air intake 18b directly flows at the flap 13e into the lower part 16b of the switching area, the other part of it, however, passes through the connection opening 18d firstly into the connection air duct 20, where avoiding switching area 16, completely closed off from it, it arrives at the passage opening 13b, from where it gets into the lower part 17b of the transformer chamber 17.

Therefore, the cooler air cooling the transformer 40 gets into the transformer chamber 17 at the lower part 13a of the dividing wall 13 opposite the side wall 12 that contains the outlet opening 19a, and due to the natural diagonal medium flow direction it ventilates the whole of the transformer chamber 17 and the transformer 40 as well, in this way the air of the entire volume of the transformer chamber 17 is continuously changed, cooled down, as a result of which the heat loss radiated from the transformer 40 can be reliably removed.

The cooler air flowing into the switching area 16 through the flap 13e located near to the connection opening 18d of the inlet vertical air intake 18b of the inlet air duct 18 at the lower part 16b of the switching area 16 serves to remove the amount of heat - significantly less than that produced by the transformer 40 - created during the operation of the switching equipment 30 located in the switching area 16. As the warm air in the switching area 16 rises here also into the upper part 16a of the switching area 16, and there it gets directly into the upper part 17a of the transformer chamber 17 through the supplementary air passage 13d of the upper part 13c of the dividing wall 13, where it is mixed up with the air heated up by the heat loss radiated from the transformer 40 and leaves to the external environment through the outlet opening 19a and the outlet air duct 19 via the outlet grid 14d.

In this way therefore, the inlet air duct 18, the connection air duct 20, the outlet air duct 19, and the supplementary air passage 13d of the dividing wall 13 together create a flow of air in which the cool air gets to the given part of the internal space 15 through the lower part 16b of the switching area 16 and the lower part 17b of the transformer chamber 17. The air heated up by the switching equipment 30 and the transformer 40 leaves the area to be cooled at the upper part 16a of the switching area 16 and the upper part 17a of the transformer chamber 17. So cooling based on a natural flow of air can be realised in complete harmony with the laws of physics, which air flow is created by the heat loss radiated by the heat production units, the switching equipment 30 and the transformer 40.

In the case that an arcing short circuit occurs caused by the irregular operation of the transformer 40 in the transformer chamber 17 and from this a sudden increase in pressure occurs, then the protection of any persons working in the switching area 16 is provided by the dividing wall 13 and the other safety equipment according to the following. When a sudden increase in pressure occurs the intermediate flap 13f fitted into the supplementary air passage 13d created in the upper part 13c of the dividing wall 13 separating the switching area 16 from the transformer chamber 17 shuts off the supplementary air passage 13d between the switching area 16 and the transformer chamber 17 and so combustion products created during the arcing short circuit are not able to get into the switching area 16. At the same time as this the flap 19c fixed into the outlet opening 19a of the outlet air duct 19 also closes, and prevents the combustion products created during the arcing short circuit leaving in the direction of the outlet air duct 19 from the transformer chamber 17 to the external environment.

After the outlet opening 19a that is in connection with the transformer chamber 17 and the supplementary air passage 13d have been closed, only the passage opening 13b in the lower part 13a of the dividing wall 13 remains free, through which the combustion products are able to leave the transformer chamber 17 due to the increased pressure. The high pressure, hot combustion products passing through the passage opening 13b into the connection air duct 20 expand, its pressure and temperature drop. When the reduced pressure combustion products reach the connection opening 18d between the connection air duct 20 and the inlet vertical air intake 18b, and pass into the inlet vertical air intake 18b, the flap 13e located in the lower part 16b of the switching area also closes, and so does not permit the combustion products to pass into the switching area 16 from the inlet vertical air intake 18b either. Since the geometric dimensions of the basic body 10 are such that the total volume of the inlet air duct 18 is greater than the volume of the connection air duct 20, the pressure and with that the temperature of the combustion products passing through the connection opening 18d of the inlet air duct 18 in to the inlet air duct 18 drop further. By the time the combustion products during their expansion reach the inlet grid 14c of the inlet ventilation vent 18a of the inlet air duct 18, they have cooled down and the pressure has reached that of the environment. So finally combustion products of a pressure and temperature that are completely harmless to the external environment get out into the external environment.

Due to the appropriately constructed expansion route and the application of structural elements shutting off the protected area, the transformer station provides appropriate protection in the case of arcing short circuits for operation and/or maintenance persons that are in the switching area 16 and also for passers-by in the environment of the transformer station.

The transformer station according tot he invention can be applied well in all locations where there is a need for units at the connection points of medium/low voltage networks that can be installed under ground level, and that also have reliable and natural cooling which also comply in all respects to aspects of accident prevention and life protection. Therefore advantageous areas of use are housing projects, historical protected town quarters and in the vicinity of schools and kindergartens.

### List of references

- 10: basic body
- 11: foundation
- 12: side wall
- 13: dividing wall
- 13a: lower part
- 13b: passage opening
- 13c: upper part
- 13d: supplementary air passage
- 13e: flap
- 13f: intermediate flap
- 14: roof
- 14a: access opening
- 14b: cover
- 14c: inlet grid
- 14d: outlet grid
- 15: internal space
- 16: switching area
- 16a: upper part
- 16b: lower part
- 17: transformer chamber
- 17a: upper part
- 17b: lower part
- 18: inlet air duct
- 18a: inlet ventilation vent
- 18b: inlet vertical air intake
- 18c: inflow ventilation grid
- 18d: connection opening
- 19: outlet air duct
- 19a: outlet opening
- 19b: outlet ventilation grid
- 19c: flap
- 20: connection air duct
- 30: switching equipment
- 40: transformer
- 50: water drainage passages
- "T": gap

## Claims

1. Transformer station with improved cooling, which has a basic body (10) containing in it an internal space (15) bordered by a foundation (11) made from a post-hardening material at least a part of which is under ground level, side walls (12) and a roof (14), the internal space (15) of the basic body (10) contains a transformer chamber (17), a switching area (16) separated from it with a dividing wall (13), and a ventilation passage linking the internal space (15) with the external environment, and located on the roof (14) of the basic body (10) there is an access opening (14a) with a cover (14b), and a grid at least partially covering the ventilation passage, **characterised by** that the grid is separated into an inlet grid (14c) and an outlet grid (14d) by a gap (T), while the ventilation passage is divided into separately arranged inlet air duct (18) and outlet air duct (19), where the inlet air duct (18) is located between the inlet grid (14c) on the roof (14) and the lower part (16b) of the switching area (16) of the internal space (15); while the outlet air duct (19) is located between the outlet grid (14d) on the roof (14) and the upper part (17a) of the transformer chamber (17), in this way the inlet air duct (18) and the outlet air duct (19) are arranged on the two sides of the dividing wall (13), and located in the dividing wall (13) there is a passage opening (13b) permitting the flow of air between the inlet air duct (18) and the outlet air duct (19).

2. Transformer station according to claim 1, **characterised by** that the passage opening (13b) is formed in the lower part (13a) of the dividing wall (13) near to the foundation (11).

3. Transformer station according to claim 1 or claim 2, **characterised by** that the inlet air duct (18) has a connection opening (18d) in the part near to the foundation (11), and the passage opening (13b) of the dividing wall (13) and the connection opening (18d) of the inlet air passage (18) are connected to each other at the lower part (16b) of the switching area (16) of the internal space (15), via the connection air duct (20) located near to the foundation (11).

4. Transformer station according to any of claims 1-3, **characterised by** that there is a flap (13e) fitted to the wall of the inlet air duct (18) that shuts off towards the switching area (16).

5. Transformer station according to any of claims 1-4, **characterised by** that there is a supplementary air passage (13,d) in the upper part (13c) of the dividing wall (13) near to the roof (14).

6. Transformer station according to claim 5, **characterised by** that there is an intermediate flap (13f) fitted into the supplementary air passage (13d) shutting off from the direction of the transformer chamber (17).

7. Transformer station according to any of claims 1-6, **characterised by** that the inlet air duct (18) has an inlet ventilation vent (18a) and an inlet vertical air intake (18b), where there is an inflow ventilation grid (18c) fitted between the inlet ventilation vent (18a) and the inlet vertical air intake (18b).

8. Transformer station according to any of claims 1-7, **characterised by** that there is an outlet ventilation grid (19b) fitted into the outlet opening (19a) of the outlet air duct (19) that starts from the transformer chamber (17).

9. Transformer station according to claim 8, **characterised by** that the outlet ventilation grid (19b) is supplemented with a flap (19c) that shuts off from the direction of the transformer chamber (17).

## Patentansprüche

1. Transformatorstation mit verbesserter Kühlung, die einen Grundkörper (10) aufweist, der darin einen inneren Raum (15) enthält, der von einem Fundament (11), das aus einem nach-aushärtenden Material hergestellt ist, wobei sich mindestens ein Teil davon unter dem Bodenniveau befindet, Seitenwänden (12) und einem Dach (14) begrenzt ist, wobei der innere Raum (15) des Grundkörpers (10) eine Transformatorkammer (17), einen mit einer Trennwand (13) von dieser getrennten Schaltbereich (16) sowie einen Ventilationsdurchgang enthält, der den inneren Raum (15) mit der äußeren Umgebung verbindet, und wobei an dem Dach (14) des Grundkörpers (10) eine Zugangsöffnung (14a) mit einer Abdeckung (14b) angeordnet ist, und wobei ein Gitter den Ventilationsdurchgang mindestens teilweise abdeckt, **dadurch gekennzeichnet, dass** das Gitter durch einen Spalt (T) in ein Einlassgitter (14c) und ein Auslassgitter (14d) unterteilt ist, wobei der Ventilationsdurchgang in einen getrennt angeordneten Einlassluftdurchgang (18) und einen Auslassluftdurchgang (19) unterteilt ist, wobei der Einlassluftdurchgang (18) zwischen dem Einlassgitter (14c) an dem Dach (14) und dem unteren Teil (16b) des Schaltbereichs (16) des inneren Raums (15) angeordnet ist, während der Auslassluftdurchgang (19) zwischen dem Auslassgitter (14d) an dem Dach (14) und dem oberen Teil (17a) der Transformatorkammer (17) angeordnet ist, wobei der Einlassluftdurchgang (18) und der Auslassluftdurchgang (19) auf diese Weise an den beiden Seiten der Trennwand (13) angeordnet sind, und wobei in der Trennwand (13) eine Durchgangsöffnung (13b) angeordnet ist, die die Strömung von Luft zwischen dem Einlassluftdurchgang (18) und dem Auslassluftdurchgang (19) ermöglicht.

2. Transformatorstation nach Anspruch 1, **dadurch gekennzeichnet, dass** die Durchgangsöffnung (13b) in dem unteren Teil (13a) der Trennwand (13) in der Nähe des Fundaments (11) ausgebildet ist.

3. Transformatorstation nach Anspruch 1 oder Anspruch 2, **dadurch gekennzeichnet, dass** der Einlassluftdurchgang (18) eine Verbindungsöffnung (18d) in dem Teil in der Nähe des Fundaments (11) aufweist, und dass die Durchgangsöffnung (13b) der Trennwand (13) und die Verbindungsöffnung (18d) des Einlassluftdurchgangs (18) über den in der Nähe des Fundaments (11) angeordneten Verbindungsluftdurchgang (20) an dem unteren Teil (16b) des Schaltbereichs (16) des inneren Raums (15) miteinander verbunden sind.

4. Transformatorstation nach einem der Ansprüche 1 bis 3, **dadurch gekennzeichnet, dass** eine Klappe (13e) an der Wand des Einlassluftdurchgangs (18) angebracht ist, die zu dem Schaltbereich (16) hin abschließt.

5. Transformatorstation nach einem der Ansprüche 1 bis 4, **dadurch gekennzeichnet, dass** ein zusätzlicher Luftdurchgang (13d) in dem oberen Teil (13c) der Trennwand (13) in der Nähe des Dachs (14) vorgesehen ist.

6. Transformatorstation nach Anspruch 5, **dadurch gekennzeichnet, dass** eine zwischengeschaltete Klappe (13f) in dem zusätzlichen Luftdurchgang (13d) angebracht ist, die von der Richtung der Transformatorkammer (17) her abschließt.

7. Transformatorstation nach einem der Ansprüche 1 bis 6, **dadurch gekennzeichnet, dass** der Einlassluftdurchgang (18) eine Einlassventilationsöffnung (18a) und eine vertikale Einlasslufteinlassöffnung (18b) aufweist, wobei ein Einlassventilationsgitter (18c) zwischen der Einlassventilationsöffnung (18a) und der vertikalen Einlasslufteinlassöffnung (18b) angebracht ist.

8. Transformatorstation nach einem der Ansprüche 1 bis 7, **dadurch gekennzeichnet, dass** ein Auslassventilationsgitter (19b) in der Auslassöffnung (19a) des Auslassluftdurchgangs (19) angebracht ist, der von der Transformatorkammer (17) aus startet.

9. Transformatorstation nach Anspruch 8, **dadurch gekennzeichnet, dass** das Auslassventilationsgitter (19b) mit einer Klappe (19c) ergänzt ist, die von der Richtung der Transformatorkammer (17) her abschließt.

## Revendications

1. Poste de transformation à refroidissement amélioré, qui comporte un corps de base (10) renfermant un espace interne (15) bordé par une fondation (11) constituée d'un matériau à post-durcissement dont au moins une partie est en dessous du niveau du sol, des parois latérales (12) et un toit (14), l'espace interne (15) du corps de base (10) contient une chambre de transformation (17), une zone de commutation (16) qui en est séparée par une cloison (13), et un passage de ventilation reliant l'espace interne (15) à l'environnement externe, et située sur le toit (14) du corps de base (10), une ouverture d'accès (14a) avec un couvercle (14b) et une grille couvrant au moins partiellement le passage de ventilation, **caractérisé en ce que** la grille est séparée en une grille d'entrée (14c) et une grille de sortie (14d) par un écartement (T), tandis que le passage de ventilation est divisé en un conduit d'air d'entrée (18) et un conduit d'air de sortie (19) disposés séparément, où le conduit d'air d'entrée (18) est situé entre la grille d'entrée (14c) sur le toit (14) et la partie inférieure (16b) de la zone de commutation (16) de l'espace interne (15), tandis que le conduit d'air de sortie (19) est situé entre la grille de sortie (14d) sur le toit (14) et la partie supérieure (17a) de la chambre de transformation (17), de cette manière le conduit d'air d'entrée (18) et le conduit d'air de sortie (19) sont disposés des deux côtés de la cloison (13), et située dans la cloison (13), une ouverture de passage (13b) permettant à l'air de circuler entre le conduit d'air d'entrée (18) et le conduit d'air de sortie (19).

2. Poste de transformation selon la revendication 1, **caractérisé en ce que** l'ouverture de passage (13b) est formée dans la partie inférieure (13a) de la cloison (13) près de la fondation (11).

3. Poste de transformation selon la revendication 1 ou la revendication 2, **caractérisé en ce que** le conduit d'air d'entrée (18) comporte une ouverture de raccordement (18d) dans la partie proche de la fondation (11), et l'ouverture de passage (13b) de la cloison (13) et l'ouverture de raccordement (18d) dudit passage d'air d'entrée (18) sont raccordées l'une à l'autre au niveau de la partie inférieure (16b) de la zone de commutation (16) de l'espace interne (15), via le conduit d'air de raccordement (20) situé près de la fondation (11).

4. Poste de transformation selon l'une quelconque des revendications 1 à 3, **caractérisé en ce qu'**il existe un volet (13e) ajusté sur la paroi du conduit d'air d'entrée (18) qui se ferme vers la zone de commutation (16).

5. Poste de transformation selon l'une quelconque des revendications 1 à 4, **caractérisé en ce qu'**il existe un passage d'air supplémentaire (13d) dans la partie supérieure (13c) de la cloison (13) près du toit (14).

6. Poste de transformation selon la revendication 5, **caractérisé en ce qu'**il existe un volet intermédiaire (13f) ajusté dans le passage d'air supplémentaire (13d) se fermant depuis la direction de la chambre de transformation (17).

7. Poste de transformation selon l'une quelconque des revendications 1 à 6, **caractérisé en ce que** le conduit d'air d'entrée (18) comporte un orifice de ventilation d'entrée (18a) et une admission d'air verticale d'entrée (18b), où il existe une grille de ventilation de flux entrant (18c) ajustée entre l'orifice de ventilation d'entrée (18a) et l'admission d'air verticale d'entrée (18b).

8. Poste de transformation selon l'une quelconque des revendications 1 à 7, **caractérisé en ce qu'**il existe une grille de ventilation de sortie (19b) ajustée dans l'ouverture de sortie (19a) du conduit d'air de sortie (19) qui démarre à partir de la chambre de transformation (17).

9. Poste de transformation selon la revendication 8, **caractérisé en ce que** la grille de ventilation de sortie (19b) est complétée d'un volet (19c) qui se ferme depuis la direction de la chambre de transformation (17).
